# EUROPEAN PATENT APPLICATION

(11) **EP 3 296 536 A1**
(43) Date of publication of application: **21.03.2018**
(21) Application number: 16188772.4
(22) Date of filing: 14.09.2016
(51) Int. Cl.: F02B 29/04, F28F 9/02, F28D 1/053

(54) **COOLING DEVICE, IN PARTICULAR FOR A MOTOR VEHICLE**

(71) Applicant: Mahle International GmbH, 70376 Stuttgart (DE)
(72) Inventor: EHRMANNTRAUT, Johann, 73547 Lorch (DE); FERRAND, Nicolas, 70191 Stuttgart (DE); HELMS, Werner, 73730 Esslingen (DE); NGUYEN, Chi-Duc, 70469 Stuttgart (DE); PAWAR, Mithun, 411018 Maharashtra (IN); RICHTER, Jens, 70469 Stuttgart (DE); ZSIGA, Gerhard, 70469 Stuttgart (DE)
(74) Representative: BRP Renaud & Partner mbB Rechtsanwälte Patentanwälte Steuerberater

(57) **Abstract**

The invention relates to a cooling device (1) for an internal combustion engine,
- comprising a heat exchanger (2), preferably a tube-fin heat exchanger, which has a plurality of gas paths (3) extending along a first direction (R1) and a plurality of coolant paths (4) extending along a second direction (R2),
- comprising a first container (6a), which is mounted laterally on the heat exchanger (2) and from which there protrudes a first tubular body (7a) fastened to the first container (6a) and extending along the first direction (R1),
- comprising a second container (6b), which is mounted laterally and adjacent to the first container (6a) on the heat exchanger and from which there protrudes a second tubular body (7b) fastened to the second container (6b) and extending along the first direction (R1).

## Description

The present invention relates to a cooling device, in particular for a motor vehicle, and to an internal combustion engine comprising such a cooling device.

Cooling devices comprising heat exchangers are used in motor vehicles, for example as charge air coolers when the charge air to be introduced into the cylinders of the internal combustion engine is to be cooled. Said heat exchanger typically comprises a plurality of gas paths through which the gas to be cooled is to flow and, fluidically separate thereto, a plurality of gas paths through which a coolant is to flow. The gas is cooled by the transfer of heat from the hot gas to the colder coolant. In order to make the efficiency of the heat exchange as efficient as possible, the individual gas and coolant paths are generally arranged alongside one another in alternation. In this way, the area available for the thermal interaction is maximized. In order to distribute the coolant over the individual coolant paths after it has been fed into the cooling device and to collect the coolant after it has flowed through the individual coolant paths, a coolant distributor or coolant collector - each in the form of a container - is usually mounted on the heat exchanger and communicates fluidically with the individual coolant paths. By way of a tubular body mounted on the coolant distributor or collector, the coolant can be fed into the coolant distributor or discharged from the coolant collector.

The assembly of the components of the cooling device, i.e. heat exchanger, coolant distributor, coolant collector and said tubular body, generally proves to be complex, however.

The present invention therefore addresses the problem of specifying, for a cooling device of the generic type, an improved or at least alternative embodiment distinguished in particular by a simplified assembly.

This object is achieved by the subject matter of the independent patent claims. Preferred embodiments are the subject matter of the dependent patent claims.

The fundamental concept of the invention is accordingly that of configuring essential components of the cooling device in such a manner that they can be mounted on the heat exchanger along the same mounting direction. This is achieved by mounting said components along a predetermined, uniform direction - referred to as "first direction" hereinbelow. In the case of the cooling device according to the invention, this applies in particular to a tubular body mountable on the coolant distributor for feeding the coolant into the tubular body and to a tubular body mountable on the coolant collector for discharging the coolant out of the cooling device. In this way, the assembly of the entire cooling device can be simplified.

A cooling device according to the invention comprises a heat exchanger, which has a plurality of gas paths which extend along a first direction and through which gas is to flow and a plurality of coolant paths which extend along a second direction and through which a coolant for cooling the gas is to flow. It is particularly preferable that the first direction extends perpendicular to the second direction. The heat exchanger is preferably in the form of a tube-fin heat exchanger. In this case, the gas paths and the coolant paths are stacked on one another in alternation along a stacking direction extending perpendicular to the first and to the second direction R1, R2. Said stacking can be realized by means of suitable tubes, this realizing the desired fluidic separation of the gas paths from the coolant paths. The heat exchanger can also be realized in the form of a stacked plate heat exchanger.

In the case of the cooling device according to the invention, a first container, from which there protrudes a first tubular body fastened to the first container and extending along the first direction, is mounted laterally on the heat exchanger. Similarly, a second container, from which there protrudes a second tubular body fastened to the second container and likewise extending along the first direction, is mounted laterally and adjacent to the first container on the heat exchanger.

In a preferred embodiment, the first tubular body has a first mouth opening and the second tubular body has a second mouth opening. In this variant, the first container is arranged between the second container and the two mouth openings along the first direction. This variant requires a particularly small amount of installation space.

In an advantageous development, the first tubular body and the first container can have a two-part form. The formation of the two components is realized here in such a manner that the first tubular body is insertable or inserted along the first direction into a first container opening present on the first container. As an alternative or in addition thereto, the second tubular body and the second container can also have a two-part form. The formation of the two components in this variant is realized in such a manner that the second tubular body is insertable or inserted along the first direction into a second container opening present on the second container. This variant makes it possible for tubular bodies of differing tubular length to be installed in a manner specific to the application.

Expediently, the first container is in the form of a coolant distributor, which communicates with the coolant paths of the heat exchanger for distributing the coolant introduced into the first container. As an alternative or in addition, the second container is in the form of a coolant collector, which communicates with the coolant paths of the heat exchanger for collecting the coolant after it has flowed through the heat exchanger. A converse assignment of coolant distributor and coolant collector to the two containers is also conceivable in one variant of this embodiment.

In a further advantageous development, a gas distributor and a gas collector are mountable or mounted on two sides of the heat exchanger which lie opposite one another along the first direction. The gas distributor and the gas collector each communicate fluidically with the gas paths of the heat exchanger for distributing and, respectively, collecting the gas to be cooled. In this variant, the gas distributor and/or the gas collector are each in the form of a housing with a hood-like configuration and have an inlet opening and outlet opening, which are oriented along the second direction R2. This development therefore also makes it possible for the gas distributor and gas collector to be mounted along the first direction.

It is particularly expedient that two apertures, through which the first and the second tubular bodies engage along the first direction, are formed on the gas distributor or on the gas collector. It is therefore possible for the two tubular bodies to be supported on the gas distributor or on the gas collector, this bringing about advantageous bracing of the cooling device.

In a further advantageous development, the cooling device comprises a housing, into which the heat exchanger can be inserted together with the two containers and the two tubular bodies as a structural unit along the first direction. This variant, too, therefore allows for said components to be installed in a housing along the unified, first direction.

A particularly practical configuration provides that the gas distributor and - alternatively or additionally - the gas collector can be fastened detachably to the housing of the heat exchanger by means of screw connections. The screw connections comprise screw elements, which can be screwed along the first direction into complementary receptacles provided on the housing.

A further preferred embodiment in which the two containers are fastened to a side wall of the heat exchanger proves to be particularly simple to realize in technical terms.

A further preferred embodiment in which the two tubular bodies each have a circumferential wall which extends along the first direction has a particularly simple structure and is therefore inexpensive. Said circumferential wall has a round, preferably a circular, geometry in a cross section perpendicular to the first direction.

A mechanically particularly stable structure of the cooling device is achieved in a further preferred embodiment in which the second tubular body is soldered to the first container at least in certain portions.

The invention further relates to an internal combustion engine comprising an exhaust system and comprising a cooling device presented above. The advantages of the cooling device according to the invention which are explained above are therefore also transferrable to the internal combustion engine.

Further important features and advantages of the invention become apparent from the dependent claims, from the drawings and from the associated description of the figures with reference to the drawings.

It goes without saying that the features mentioned above and the features still to be explained below can be used not only in the combination specified in each case but also in other combinations or on their own, without departing from the scope of the present invention.

Preferred exemplary embodiments of the invention are illustrated in the drawings and will be explained in more detail in the description which follows.

In each case schematically:
- Fig. 1: shows an example of a cooling device according to the invention in an exploded illustration,
- Fig. 2: shows the cooling device of Figure 1 in a perspective illustration,
- Fig. 3: shows a development of the cooling device of Figure 1 in an exploded illustration,
- Fig. 4: shows the cooling device of Figure 3 in a perspective illustration.

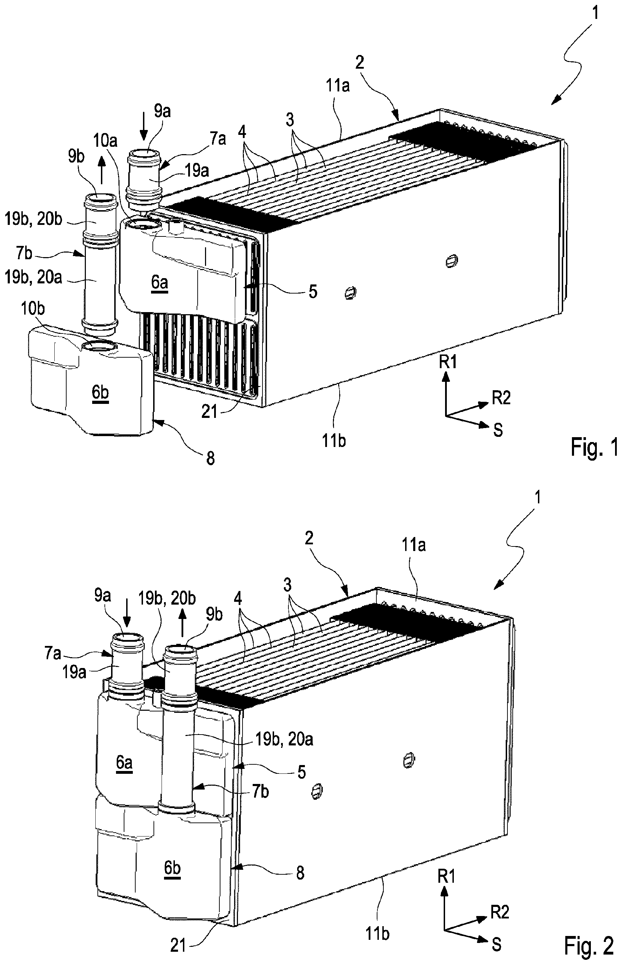

Figur 2 shows an example of a cooling device 1 according to the invention in an assembled state. Figure 1 is an exploded illustration of the cooling device 1 of Figure 2. The cooling device 1 comprises a heat exchanger, which in the example of the figures is configured as a tube-fin heat exchanger. The heat exchanger 2 or tube-fin heat exchanger has a plurality of gas paths 3 extending along a first direction R1 and a plurality of coolant paths 4 extending along a second direction R2. The gas paths 3 and the coolant paths 4 can be stacked on one another along a stacking direction S, which runs perpendicular both to the first direction R1 and to the second direction R2. Heat is withdrawn from the gas to be cooled and fed to the coolant by heat exchange between the gas and the coolant, as a result of which the desired cooling of the gas is achieved.

In order to feed the coolant for cooling the gas to the individual coolant paths 4, a coolant distributor 5 is provided on the heat exchanger 2. The coolant distributor 5 comprises a first container 6a, which is mounted laterally with respect to the stacking direction S on the heat exchanger 2 and from which there protrudes upwards a first tubular body 7a fastened to the first container 6a. By way of the first tubular body 7a, the coolant can be fed into the first container 6a and distributed therefrom over the individual coolant paths 4. To this end, the first container 6a communicates with the coolant paths 4 of the heat exchanger 2. Expediently, the two containers 6a, 6b are fastened to a side wall 21 of the heat exchanger 2.

In order to collect the coolant after it has flowed through the individual coolant paths 4 and to discharge it from the cooling device 1, a coolant collector 8 which likewise communicates with the coolant paths 4 is provided on the heat exchanger 2. The coolant collector 8 comprises a second container 6b, which is mounted beneath the first container 6a and adjacent thereto on the heat exchanger 2. A second tubular body 7b fastened to the second container 6b protrudes upwards from the second container 6b. In the exemplary scenario, the two tubular bodies 7a, 7b both extend each along the first direction R1. The two tubular bodies 7a, 7b thus extend parallel to one another. The second tubular body 7b can be soldered to the first container 6a at least in certain portions. The two containers 6a, 6b are in this case arranged and fastened one above the other on the same side of the heat exchanger 2 on the housing wall 21. In one variant of the example, the coolant distributor 5 and the coolant collector 8 can be interchanged. The terms "top", "bottom", "above" and "beneath" used above and hereinbelow preferably refer to a mounting position or to a position of use of the cooling device 1 in a motor vehicle.

As shown in Figures 1 and 2, the first tubular body 7a has a first mouth opening 9a and the second tubular body 7b has a second mouth opening 9b. In this case, the first container 6a is arranged between the second container 6b and the two mouth openings 9a, 9b with respect to the first direction R1.

The first tubular body 7a and the first container 6a have a two-part form. In this case, the first tubular body 7a is insertable along the first direction R1 into a first container opening 10a present on the first container 6a. It is also the case that the second tubular body and the second container have a two-part form. Accordingly, the second tubular body 7b is insertable along the first direction R1 into a second container opening 10b present on the second container 6b.

The second tubular body 7b can also have a multi-part form - in the example of Figure 2, a two-part form is shown by way of example - with a first tubular piece 20a and a second tubular piece 20b adjoining the latter in the first direction R1. A multi-part form of this type is analogously also possible in the case of the first tubular body 7a.

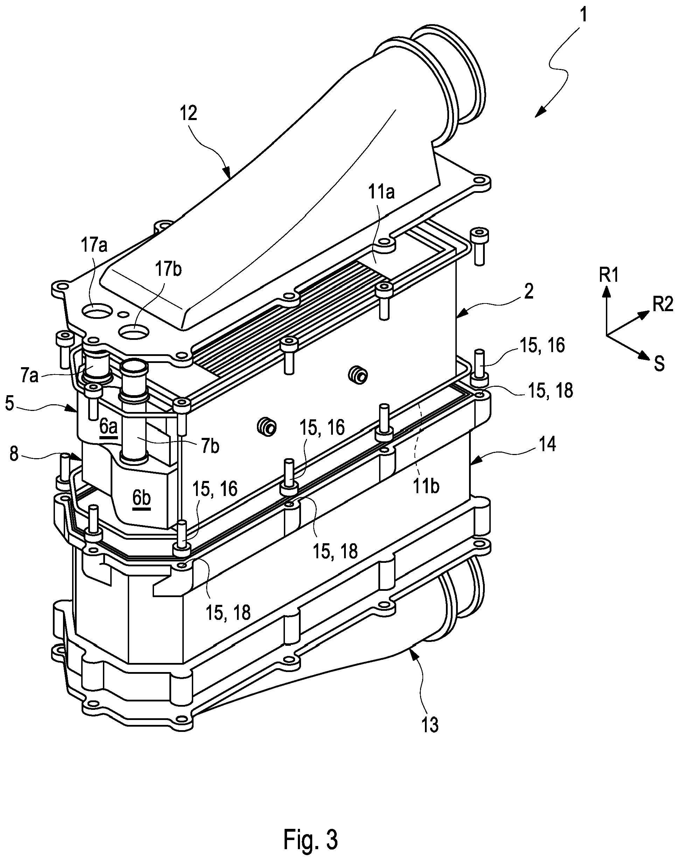

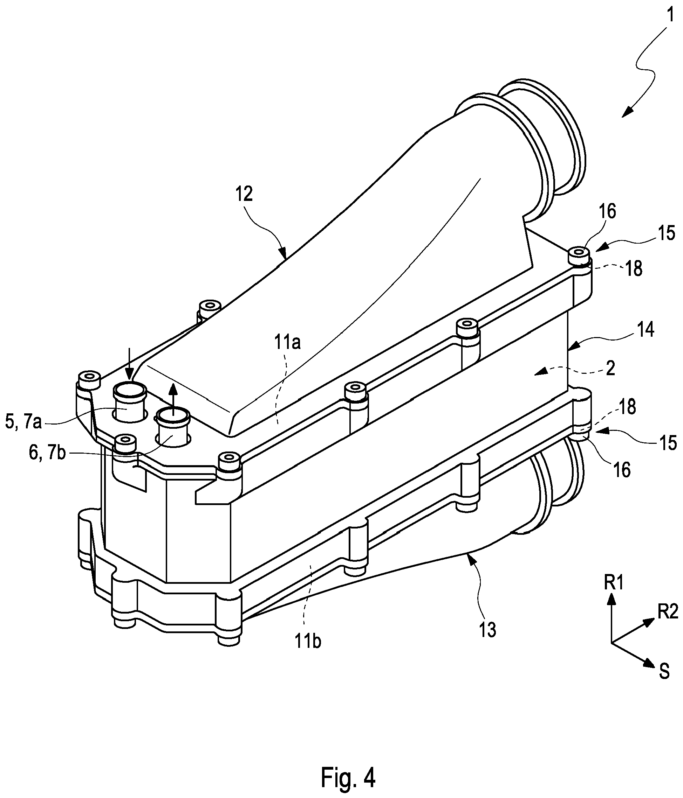

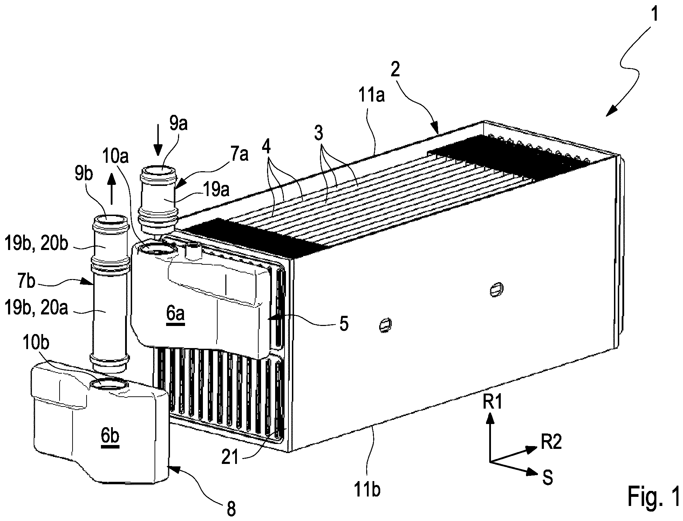

Figures 3 and 4 show a development of the cooling device 1 of Figures 1 and 2. Figure 3 shows an exploded illustration of the cooling device 1 of Figure 4. In the case of the development shown in Figure 4, a gas distributor 12 and a gas collector 13 are fastened detachably to the heat exchanger 2 on two sides 11 a, 11 b of the heat exchanger 2 which lie opposite one another along the first direction R1. The gas distributor 12 and the gas collector 13 each communicate with the individual gas paths 3, in order to distribute the gas to be cooled over the individual gas paths 3 of the heat exchanger 2a and to collect it again after it has flowed through the heat exchanger 2. As Figure 3 clearly verifies, the gas distributor 12 and the gas collector 13 are each in the form of a housing with a hood-like configuration and have an inlet opening and outlet opening, which are oriented along the second direction R2. Two apertures 17a, 17b, through which the first and the second tubular bodies 7a, 7b engage along the first direction R1, are formed on the gas distributor 12.

As can furthermore be seen in Figures 3 and 4, the cooling device 1 comprises a housing 14, into which the heat exchanger 2 can be inserted together with the two containers 6a, 6b and the two tubular bodies 7a, 7b along the first direction R1. The gas distributor 12 and the gas collector 13 are fastened detachably to the housing 14 of the heat exchanger 2 by means of screw connections 15. The screw connections 15 comprise screw elements 16, which can be screwed along the first direction R1 into complementary receptacles 18 provided on the housing.

## Claims

1. Cooling device (1) for an internal combustion engine,
- comprising a heat exchanger (2), preferably a tube-fin heat exchanger, which has a plurality of gas paths (3) extending along a first direction (R1) and a plurality of coolant paths (4) extending along a second direction (R2),
- comprising a first container (6a), which is mounted laterally on the heat exchanger (2) and from which there protrudes a first tubular body (7a) fastened to the first container (6a) and extending along the first direction (R1),
- comprising a second container (6b), which is mounted laterally and adjacent to the first container (6a) on the heat exchanger (2) and from which there protrudes a second tubular body (7b) fastened to the second container (6b) and extending along the first direction (R1).

2. Cooling device according to Claim 1,
**characterized in that**
the first tubular body (7a) has a first mouth opening (9a) and the second tubular body (7b) has a second mouth opening (9b),
wherein the first container (6a) is arranged between the second container (6b) and the two mouth openings (9a, 9b) along the first direction (R1).

3. Cooling device according to Claim 1 or 2,
**characterized in that**
the first tubular body (7a) and the first container (6a) have a two-part form, in such a manner that the first tubular body (6a) is insertable or inserted along the first direction (R1) into a first container opening (10a) present on the first container (6a).

4. Cooling device according to one of Claims 1 to 3,
**characterized in that**
the second tubular body (7b) and the second container (6b) have a two-part form, in such a manner that the second tubular body (7b) is insertable or inserted along the first direction (R1) into a second container opening (10b) present on the second container (6b).

5. Cooling device according to one of the preceding claims,
**characterized in that**
the first container (6a) is in the form of a coolant distributor (5), which communicates with the coolant paths (4) of the heat exchanger (2) for distributing the coolant introduced into the first container (6a), and/or **in that** the second container (6b) is in the form of a coolant collector (8), which communicates with the coolant paths (4) of the heat exchanger (2) for collecting the coolant after it has flowed through the heat exchanger (2), or vice versa.

6. Cooling device according to one of the preceding claims,
**characterized in that**
a gas distributor (12) and a gas collector (13) are mountable or mounted on two sides (11 a, 11 b) of the heat exchanger which lie opposite one another along the first direction (R1), said gas distributor and gas collector communicating fluidically with the gas paths (3) of the heat exchanger (2) for distributing and, respectively, collecting the gas to be cooled.

7. Cooling device according to Claim 6,
**characterized in that**
the gas distributor (12) and/or the gas collector (13) are each in the form of a housing with a hood-like configuration and have an inlet opening and outlet opening, which are oriented along the second direction (R2).

8. Cooling device according to Claim 6 or 7,
**characterized in that**
two apertures (17a, 17b), through which the first and the second tubular bodies (7a, 7b) engage along the first direction (R1), are formed on the gas distributor (12) or on the gas collector (13).

9. Cooling device according to one of Claims 7 to 9,
**characterized in that**
the cooling device comprises a housing (14), into which the heat exchanger (2) can be inserted together with the two containers (6a, 6b) and the two tubular bodies (7a, 7b) as a structural unit along the first direction (R1).

10. Cooling device according to one of Claims 7 to 10,
**characterized in that**
the gas distributor (12) and/or the gas collector (13) can be fastened detachably to the housing (14) of the heat exchanger (2) by means of screw connections (15),
wherein the screw connections (14) comprise screw elements (16), which can be screwed along the first direction (R1) into complementary receptacles (18) provided on the housing (14).

11. Cooling device according to one of the preceding claims,
**characterized in that**
the two containers (6a, 6b) are fastened to a side wall (21) of the heat exchanger (2).

12. Cooling device according to one of the preceding claims,
**characterized in that**
the two tubular bodies (7a, 7b) each have a circumferential wall (19a, 19b), which extends along the first direction (R1) and has a round, preferably a circular, geometry in a cross section perpendicular to the first direction (R1).

13. Cooling device according to one of the preceding claims,
**characterized in that**
the second tubular body (7b) is soldered to the first container (6a) at least in certain portions.

14. Internal combustion engine comprising an exhaust system and comprising a
cooling device (1) according to one of the preceding claims.
